# EUROPEAN PATENT APPLICATION

(11) **EP 2 650 562 A1**
(43) Date of publication of application: **16.10.2013**
(21) Application number: 12305419.9
(22) Date of filing: 10.04.2012
(51) Int. Cl.: F16H 25/20, F16H 25/22, G01K 13/04, F16H 57/04

(54) **Screw nut assembly with temperature sensor**

(71) Applicant: Aktiebolaget SKF, 415 50 Göteborg (SE)
(72) Inventor: Buvril, Gérard, 73370 Le Bourget du Lac (FR)
(74) Representative: Casalonga, Axel

(57) **Abstract**

The screw nut assembly (10) comprises a screw (12) provided with an outer thread (14), a nut (16) provided with an inner thread (18), a plurality of rolling means (20) radially disposed between the screw and the nut and adapted to cooperate with said outer and inner threads, and a system (30) for detecting the temperature of the nut comprising at least a sensor (32). The sensor (32) is mounted on the nut.

## Description

The present invention relates to screw nut assemblies or devices. The screw nut assemblies may be, for example, used to displace loads by transforming rotary action into linear motion.

A screw nut assembly generally comprises a nut and an elongated cylindrical screw extending through an opening formed through the nut, the outer surface of said screw and the inner surface of said nut being provided with complementary threads. The assembly may further comprise a plurality of balls engaged into both of the threads so as to provide a rolling engagement between the screw and the nut. Alternatively, the assembly may comprise a plurality of longitudinal rollers cooperating with the outer and inner thread of the screw and the nut.

Patent EP-B1-1 595 681 discloses a ball screw assembly used in an injection molding machine and provided with such a screw, a nut and a plurality of balls engaged in both of the threads of said screw and nut. The ball screw assembly further comprises a temperature sensor that detects the temperature of the nut.

In use, a frictional heat is generated at the contact zones between the inner thread of the nut and the balls. Such a raise of temperature may reduce the service life of the ball screw assembly. Accordingly, the temperature of the nut is detected to adjust the amount and the temperature of the lubrication oil.

With the sensor as disclosed in this patent, the detection of the temperature may be not achieved in a precise way.

One aim of the present invention is to overcome this drawback.

It is a particular object of the present invention to provide a screw nut assembly which is simple to manufacture and to assembly, economic while guaranteeing a precise detection of the temperature of the nut.

In one embodiment, the screw nut assembly comprises a screw provided with an outer thread, a nut provided with an inner thread, a plurality of rolling means radially disposed between the screw and the nut and adapted to cooperate with said outer and inner threads, and a system for detecting the temperature of the nut comprising at least a sensor. The sensor is mounted on the nut.

With a sensor directly mounted on the nut, the temperature reached by the nut during the running condition is detected in a precise and sure way.

In one preferred embodiment, the sensor extends into the thickness of the nut.

With a sensor extending into the thickness of the nut, it is possible to control the temperature inside the nut. This leads to a limitation of the impact of the outside temperature variations on the detected temperature by the sensor. Besides, the active part of the sensor may be located inside the nut near to the zones of contact between the inner thread of the nut and the rolling means. Preferably, the free end of the sensor is located near to the inner thread of the nut. For example, the radial distance between the inner thread of the nut and the free end of the sensor is less than or equal to 2 mm.

Advantageously, the sensor extends into a radial hole made in the thickness of the nut. Alternatively, the sensor may extend into an axial hole made in the thickness of the nut.

In one embodiment, the system for detecting temperature protrudes relative to an outer surface of the nut. Alternatively, said system may be mounted into a recess formed on the outer surface of the nut.

In one embodiment, the system for detecting temperature comprises an electronic circuit board supporting the sensor. Said system may further comprise at least a battery connected to the electronic circuit board and a casing supporting said battery. The electronic circuit board may be mounted against the casing on the opposite side to the battery. The system may further comprise a cover closing a space inside which are located the battery, the electronic circuit board and the casing.

In one embodiment, the assembly further comprises a control unit connected to the electronic circuit board to continuously process signals transmitted by the sensor. The assembly may comprise wireless transmission means to connect the control unit and the electronic circuit board. Alternatively, a wire connection may be foreseen between the control unit and the electronic circuit board.

In one embodiment, the rolling means comprise rollers. Alternatively, the rolling means comprise balls.

In another aspect of the invention, a linear actuator comprises a motor and a screw nut assembly as previously defined, the screw of said assembly being connected to the motor.

The present invention and its advantages will be better understood by studying the detailed description of specific embodiments given by way of non-limiting examples and illustrated by the appended drawings on which:
- Figures 1 and 2 are front and top views of a screw nut assembly according to a first example of the invention,
- Figure 3 is detail view of Figure 1,
- Figures 4 and 5 are front and top views of a screw nut assembly according to a second example of the invention, and
- Figure 6 is detail view of Figure 4.

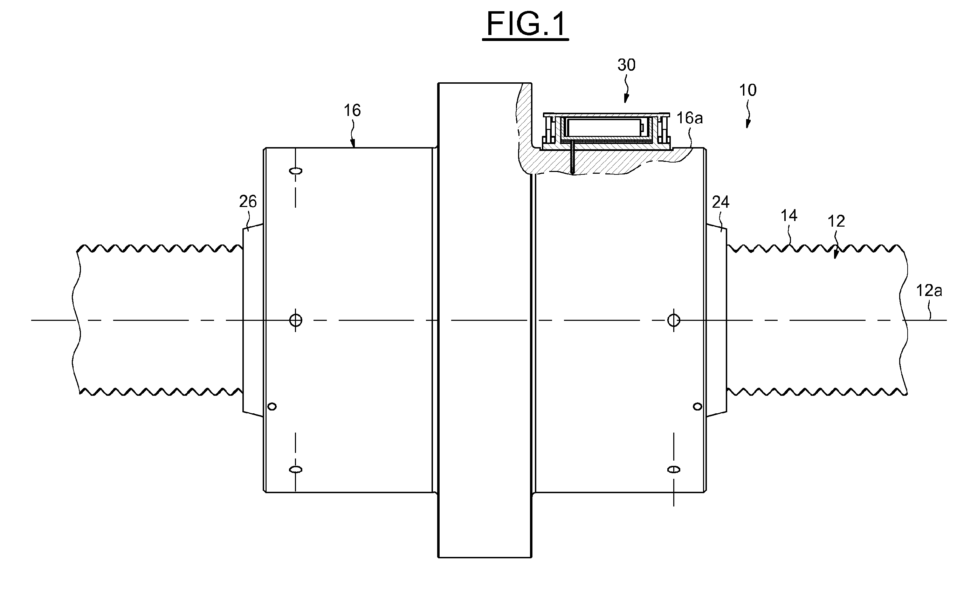

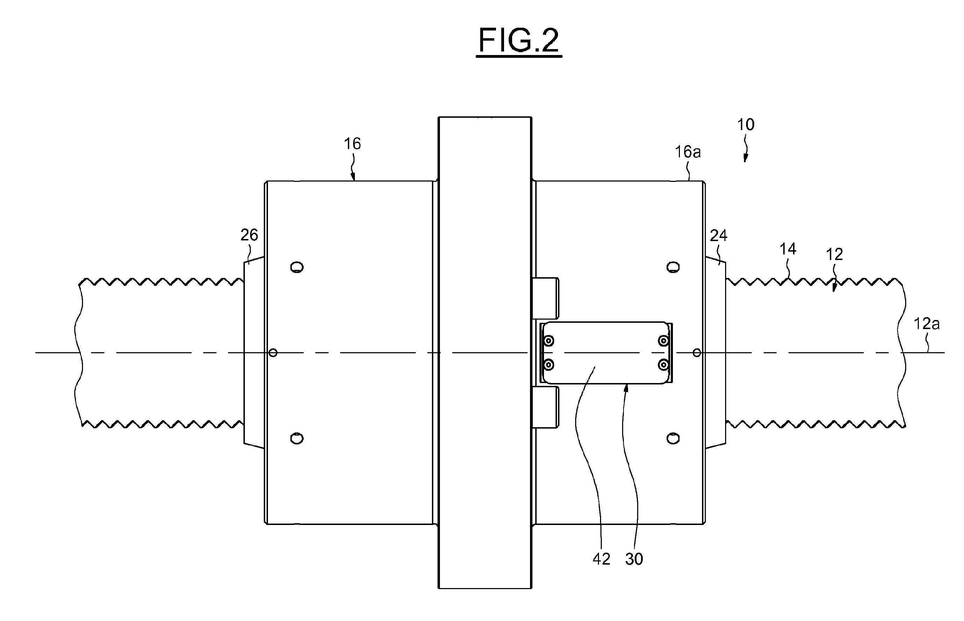

As illustrated on the Figures 1 to 3, which illustrate an embodiment of a screw nut device or assembly 10 according to a first example of the invention, the assembly comprises a screw 12, with a longitudinal axis 12a, provided with an outer thread 14, a nut 16 having an inner thread 18 whose internal diameter is bigger than the external diameter of the outer thread 14. The screw 12 extends along the longitudinal axis 12a through a cylindrical opening of the nut from which is formed the inner thread 18.

The assembly 10 also comprises a plurality of longitudinal rollers 20 each having an outer thread 22 engaging with the outer and inner threads 14, 18 for connecting the screw 12 and the nut 16. The assembly 10 further comprises end caps 24, 26 each fixed at the axial ends of the opening of the nut 16. The rollers 20 enable to provide a rolling engagement between the screw 12 and the nut 16. The rollers 20 are identical to one another and regularly disposed around the screw 12. The rollers 20 are disposed radially between said screw and the nut 16. For more detail on such rollers, it is possible for example to refer to the patent US-B2-7 000 495.

With the rollers 20, a rotation of the screw 12 relative to the nut 16 is transformed into a longitudinal linear movement along the axis 12a of said nut with respect to the screw. Alternatively, a rotation of the nut 16 relative to the screw 12 causes the linear movement of said screw.

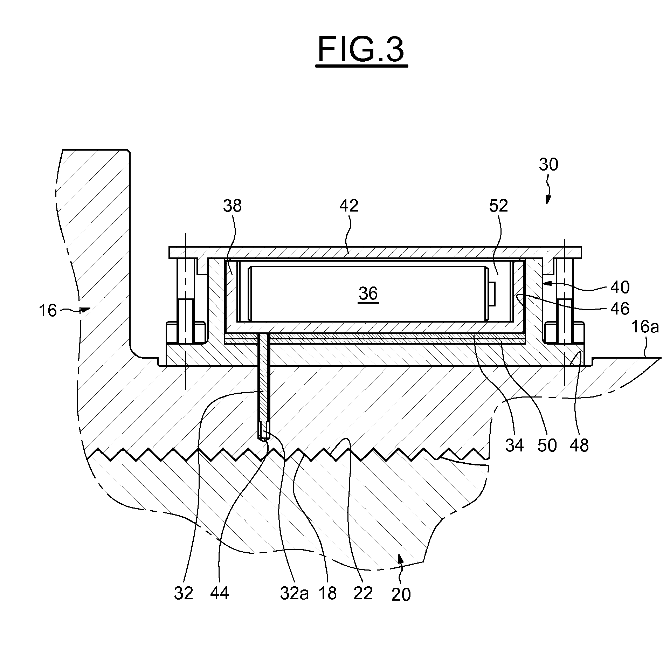

As clearly shown on Figure 3, the assembly 10 further comprises a system 30 adapted to detect the temperature of the nut and which is mounted on the outer cylindrical surface 16a of said nut. In this embodiment, the system 30 protrudes radially relative to the outer surface 16a.

The system 30 comprises a temperature sensor 32, an electronic circuit board 34 connected to said sensor, batteries 36, an inner casing 38 supporting the batteries, an outer casing 40 for mounting said system on the outer surface 16a of the nut and a cover 42.

The sensor 32 is mounted into a hole 44 extending radially from the outer surface 16a of the nut towards the inner thread 18. The hole 44 is a blind hole and the bottom of said hole remains radially distant from the inner thread 18. Alternatively, the hole may open into the inner thread 18. The sensor 32 extends radially into the hole 44 towards the inner thread 18 of the nut. A free active end 32a of the sensor 32 is located near to said inner thread 18. The sensor 32 is positioned at a short radial distance away from the zone of contacts between the inner thread 18 and the outer thread 22 of each roller 20. For instance, the radial distance between the active end 32a of the sensor 32 and the inner thread 18 of the nut is less than or equal to 2 mm. The sensor 32 extends radially inside the nut 16. The sensor 32 also protrudes radially outwards relative to the outer surface 16a of the nut to be connected to the electronic circuit board 34. The sensor 32 may be a negative temperature coefficient (NTC) sensor with a temperature range from 0°C to 100°C.

The electronic circuit board 34 supports the sensor 32. The sensor 32 is fixed to the electronic circuit board 34 for example by soldering. The sensor 32 protrudes radially inwards relative to the electronic circuit board 34 towards the nut 16. The electronic circuit board 34, for example of the printed circuit type, also supports a plurality of electronics components (not shown) making it possible to process the signals emitted by the sensor 32 and to generate an output signal which is representative of the temperature inside the nut 16 near to the inner thread 18. In the disclosed embodiment, the electronic circuit board 34 has a rectangular form.

The electronic circuit board 34 is located inside a rectangular space 46 delimited by the outer casing 40 which is fixed on the outer surface 16a of the nut by any appropriate means, for example by screwing. A flat portion 48 is formed on the outer surface 16a for the mounting of the outer casing 40.

The outer casing 40 is in the form of a hollow parallelepiped delimiting the space 46 in which the electronic circuit board 34 is disposed. The casing 40 thus defines an open housing for the electronic circuit board 34. The outer casing 40 projects radially outwards and occupies on the outer surface 16a of the nut a limited angular sector. The outer casing 40 serves to guide the electronic circuit board 34 when said board is mounted into the space 46.

The system 30 further comprises an insulating part 50 radially interposed between the electronic circuit board 34 and the bottom of the space 46 of the outer casing. The insulating part 50 has the overall shape of a rectangular parallelepiped, is inserted into the space 46 of the outer casing and mounted into contact with the bottom of said space and the electronic circuit board 34. The insulating part 50 may be made for example of synthetic material such as Bakelite. The insulating part 50 and the outer casing 40 each comprise a radial through-hole (not referenced) made into their thickness and which faces the hole 44 of the nut in order to allow the sensor 32 to be mounted into said hole.

The inner casing 38 is located inside the space 46 of the outer casing and comes radially into contact with the electronic circuit board 34 on the side opposite to the insulating part 50. The inner casing 38 has in cross-section of U-shape oriented radially outwards and defines a space 52 into which are located the batteries 36. The inner casing 38 is guided by the outer casing 40 during its insertion into the space 36. The inner casing 38 is entirely disposed into said space and do not protrude radially outwards relative to the outer casing 40. The cover 42 closes the space 36 into which are located the insulating part 50, the electronic circuit board 34, the inner casing 38 and the batteries 36. The cover 42 is mounted against the upper part of the outer casing 38 and is fixed to said casing by any appropriate means, for example by screwing.

As already mentioned, the batteries 36 are disposed into the space 52 of the inner casing 38 which is also closed by the cover 42. The batteries 36 are mounted against the casing 38 radially on the side opposite to the electronic circuit board 34. The batteries 36 provide a power supply to the electronic circuit board 34. Electrical connections (not shown) are provided between the batteries 36 and the electronic circuit board 34. The batteries 36 may be of the disposable type or may be rechargeable. In the illustrated embodiment, the batteries 36 are of the AA type.

The system 30 further comprises a control unit (not shown) connected to the electronic circuit board 34 to continuously process the data or signals transmitted by the sensor 32. The control unit may comprise a transmission antenna for a wireless transmission with the electronic circuit board 34. Alternatively, the control unit may comprise a wire to be connected to the electronic circuit board 34. In this case, it is not necessary to foresee the batteries 36.

The control unit enables to follow the running condition of the screw nut assembly 10 with the detection of the temperature of the nut. In fact, each variation of the running condition generates a temperature variation at the zones of contact between the inner thread 18 of the nut and the rollers 20. With such a detection of the temperature, the control unit may for example optimize the flow rate of the lubrication to avoid an overheating, stop the screw nut assembly before any irreversible damage, and be able to plan maintenance to order a new assembly.

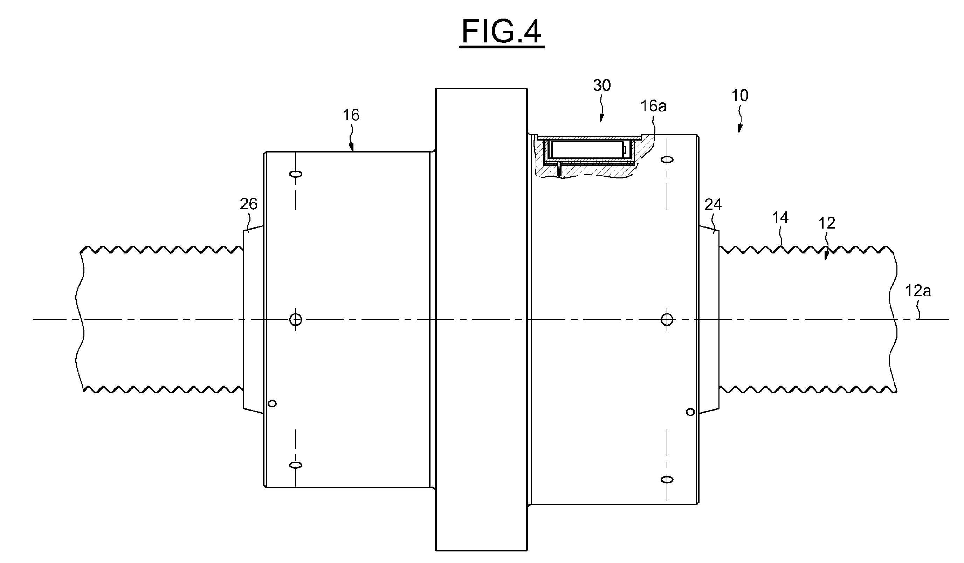

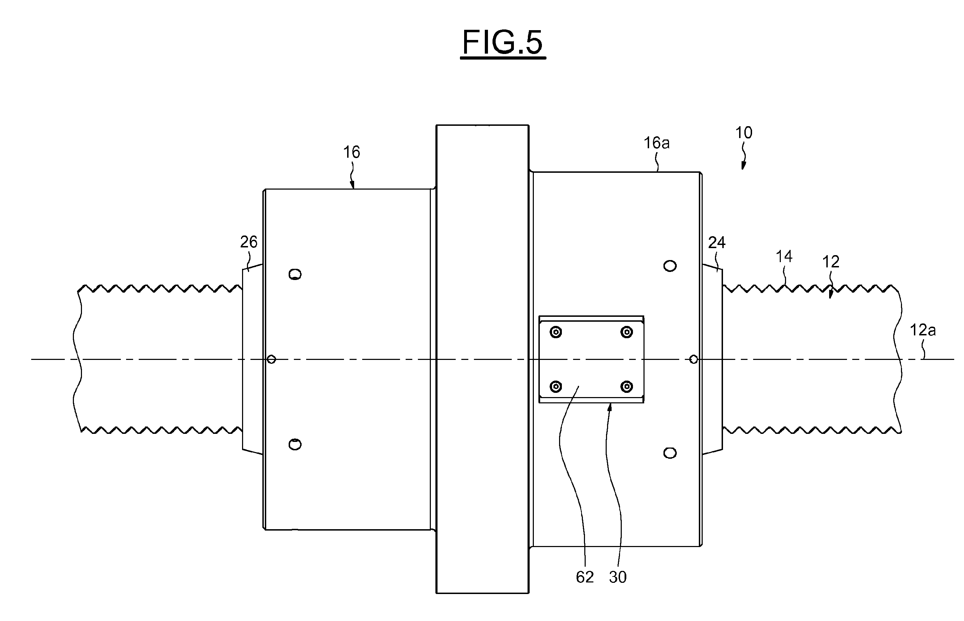

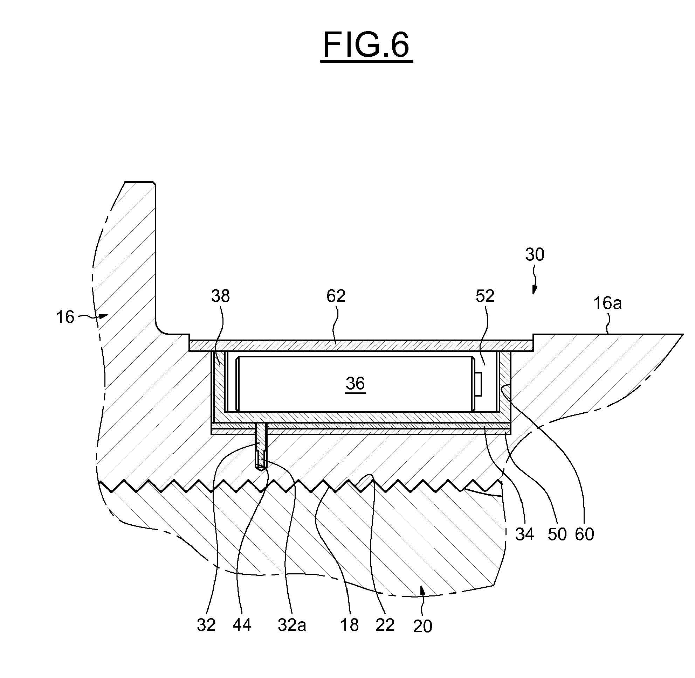

The embodiment shown on Figures 4 to 6, in which identical parts are given identical references, differs from the previous embodiment in that the system 30 for detecting the temperature of the nut is mounted into a recess 60 formed on the outer surface 16a of the nut. The system 30 is completely located or housed into the recess 60 so that any part of said system protrudes radially outwards relative to the outer surface 16a of the nut. The system 30 is protected from the outside from any mechanical damages. The system 30 comprises a cover 62 mounted radially against a radial wall of the recess. The cover 62 is fixed to the nut 16 by any appropriate means, for example by screwing. The cover 62 closes from the outside the recess 60 into which are located the batteries 36, the casing 38, the electronic circuit board 34 and the insulating part 50. In this embodiment, the radial lengths of the sensor 32 and the hole 44 are reduced. The hole 44 extends radially from the bottom of the recess 60 towards the inner thread 18 of the nut. The insulating part 50 is mounted radially against said bottom. In this embodiment, there is no outer casing.

In the disclosed embodiments, the temperature sensor extends radially into the thickness of the nut to control the temperature inside the nut. Alternatively, it could be also possible to foresee a temperature sensor extending axially into the thickness of the nut. In another embodiment, the temperature sensor may also be mounted on the outer surface of the nut, for example by gluing. However, with such a disposition, the active part of the sensor is moved away from the zones of contact between the inner thread of the nut and the rollers. In another embodiment, it is also possible to use several temperature sensors.

Although the invention has been illustrated on the basis of a roller screw assembly, it should be understood that the invention can also be applied to a ball screw assembly. In this case, balls are engaged partly in the outer thread of the screw and partly in the inner thread of the nut and form the rolling means to provide a rolling engagement between the screw and the nut.

## Claims

1. Screw nut assembly comprising a screw (12) provided with an outer thread (14), a nut (16) provided with an inner thread (18), a plurality of rolling means (20) radially disposed between the screw and the nut and adapted to cooperate with said outer and inner threads, and a system (30) for detecting the temperature of the nut comprising at least a sensor (32), **characterized in that** the sensor (32) is mounted on the nut.

2. Assembly according to claim 1, wherein the sensor extends into the thickness of the nut.

3. Assembly according to claim 2, wherein the sensor (32) extends into a radial hole (44) made in the thickness of the nut.

4. Assembly according to any of the preceding claims, wherein the free end of the sensor (32) is located near to the inner thread (18) of the nut.

5. Assembly according to claim 4, wherein the radial distance between the inner thread of the nut and the free end of the sensor is less than or equal to 2 mm.

6. Assembly according to any of the preceding claims, wherein the system (30) for detecting temperature protrudes relative to an outer surface (16a) of the nut.

7. Assembly according to any of the preceding claims 1 to 5, wherein the system (30) for detecting temperature is mounted into a recess (60) formed on an outer surface of the nut.

8. Assembly according to any of the preceding claims, wherein the system (30) for detecting temperature comprises an electronic circuit board (34) supporting the sensor.

9. Assembly according to claim 8, wherein said system (30) further comprises at least a battery (36) connected to the electronic circuit board (34) and a casing (38) supporting said battery.

10. Assembly according to claim 9, wherein the electronic circuit board (34) is mounted against the casing (38) on the opposite side to the battery.

11. Assembly according to claim 9 or 10, wherein said system (30) further comprises a cover (42; 62) closing a space inside which are located the battery (36), the electronic circuit board (34) and the casing (38).

12. Assembly according to any of the preceding claims 8 to 11, further comprising a control unit connected to the electronic circuit board (34) to continuously process signals transmitted by the sensor (32).

13. Assembly according to claim 12, comprising wireless transmission means to connect the control unit and the electronic circuit board.

14. Assembly according to any of the preceding claims, wherein the rolling means comprise rollers or balls.

15. Linear actuator comprising a motor and a screw nut assembly according to any of the preceding claims, the screw of said assembly being connected to the motor.
